# EUROPEAN PATENT SPECIFICATION

(11) **EP 3 828 134 B1**
(45) Date of publication and mention of the grant of the patent: **03.07.2024**
(21) Application number: 19840805.6
(22) Date of filing: 16.07.2019
(51) Int. Cl.: C01B 33/035

(54) **CORE WIRE HOLDER, APPARATUS FOR PREPARING SILICON, AND METHOD FOR PREPARING SILICON**
KERNDRAHTHALTER, VORRICHTUNG ZUR HERSTELLUNG VON SILIZIUM UND VERFAHREN ZUR HERSTELLUNG VON SILIZIUM
SUPPORT DE FIL DE NOYAU ET PROCÉDÉ POUR LA PRODUCTION DE SILICIUM POLYCRISTALLIN

(30) Priority: 23.07.2018 JP 2018137960
(43) Date of publication of application: 02.06.2021
(73) Proprietor: Tokuyama Corporation, Shunan-shi, Yamaguchi 745-8648 (JP)
(72) Inventor: ISHIKAWA, Kohichi, Shunan-shi, Yamaguchi 745-8648 (JP); IMURA, Tetsuya, Shunan-shi, Yamaguchi 745-8648 (JP); AIMOTO, Yasumasa, Shunan-shi, Yamaguchi 745-8648 (JP)
(74) Representative: Bittner, Thomas L.
(86) International application number: PCT/JP2019/027956
(87) International publication number: WO 2020/022125

(56) References cited:
- EP-A1- 2 368 847
- EP-A1- 2 489 634
- EP-A1- 3 216 760
- CN-U- 202 988 742
- JP-A- 2011 195 439
- JP-A- 2016 088 796
- US-A1- 2014 030 440

## Description

The present invention relates to: a filament holder which is included in a bell-jar reactor of a silicon production apparatus and which is for holding a silicon filament; a silicon production apparatus; and a silicon production method.

### Background

One of the conventionally known methods of producing silicon (which is used as a raw material for a semiconductor or a raw material for a wafer for use in photovoltaic power generation) is, for example, Siemens process. A method of producing silicon using Siemens process involves supplying a mixed gas composed of hydrogen and trichlorosilane into a bell-jar reactor in which a silicon filament is held upright by a filament holder. This allows silicon to be deposited and grow around the silicon filament, making it possible to obtain polysilicon (also called "polycrystalline silicon").

A conventional silicon production apparatus is disclosed in, for example, JP 2009-256191. JP 2009-256191 discloses that the shape of a filament holder includes a tapered portion which decreases in diameter in the upward direction and that the angle of the tapered portion to the perpendicular is not less than 35 degrees and not more than 65 degrees.

However, according to the conventional filament holder disclosed in JP 2009-256191, the taper angle of the conical shape is large. This narrows the range of angles from which source gas is directed toward the base portion of the silicon filament held upright by the filament holder, resulting in a reduction in deposition of silicon on the silicon filament.

The document EP 3 216 760 A1 discloses a core wire holder attached on an electrode placed on a bottom panel of a device for producing silicon by Siemens process, which includes a silicon core wire holding portion being generally circular truncated cone-shaped, and holding and energizing a silicon core wire. The silicon core wire holding portion includes a generally circular truncated cone having an upper surface formed with a silicon core wire insertion hole for holding the silicon core wire, and the silicon core wire holding portion includes an upper surface and a side surface, which form a ridge having a curved surface and serving as a chamfered portion.

According to the document EP 2 489 634 A1, one end side of a core wire holder is formed into a shape of a truncated cone and has an inclined surface. In the end portion, an opening is provided, and a hollow portion is formed, a silicon core wire being inserted into the hollow portion and held therein. On the surface of the silicon core wire, polycrystalline silicon is vapor deposited by the Siemens method to produce a polycrystalline silicon rod. On the inclined surface of the truncated cone portion in the vicinity of the opening, as a thermal insulating layer, annular slits are formed from an outer circumferential surface in the vicinity of the opening toward the hollow portion. The annular slit acts as a thermal insulating portion, and suppresses escape of the heat to heat the one end side of the core wire holder.

The document US 2014 / 030440 A1 relates to a core wire holder that is formed with a core wire insert hole having an opening part on an upper surface of a main body and extending toward a lower surface side, and a silicon core wire 5 is inserted into the core wire insert hole. In addition, a slit-like gap part extending along a virtual plane including a central axis of the core wire insert hole is formed, and the slit-like gap part is a gap part extending from the core wire insert hole to reach an outer surface of the main body of the holder. The silicon core wire inserted in the core wire insert hole is fixed by fastening an upper part of the main body of the holder from sides with, for example, a bolt/nut type fixing member.

In the document EP 2 368 847 A1, a graphite electrode is described. The electrode has an outer zone forming a base of the electrode, and a high- or ultrahigh-pure electrical graphite with different thermal conductivities. An inner zone is arranged in the outer zone and projected from the outer zone. Specific thermal conductivity of the inner zone is lower than that of the outer zone. The inner zone is partly surrounded by the outer zone. The inner zone is formed as a loose or replaceable insert. The inner and outer zones have common thermal and electrical contacts. The inner zone is connected in the outer zone by using a conical plug.

### Summary

The present invention was made in view of the above conventional issue, and an object thereof is to provide a filament holder, a silicon production apparatus, and a silicon production method each of which is capable of improving deposition of silicon on a base portion of a silicon filament and which in turn makes it possible to improve deposition of silicon on the entire silicon filament.

In order to attain the above object, a filament holder in accordance with the independent claim 1 is provided. Further, a silicon production apparatus and a silicon production method according to further independent claims are provided. Embodiments are the subject matter of dependent claims in the appended set of claims.

An aspect of the present invention brings about the following effect: providing a filament holder, a silicon production apparatus, and a silicon production method each of which is capable of improving deposition of silicon on a base portion of a silicon filament and which in turn makes it possible to improve deposition of silicon on the entire silicon filament.

### Description of Embodiments

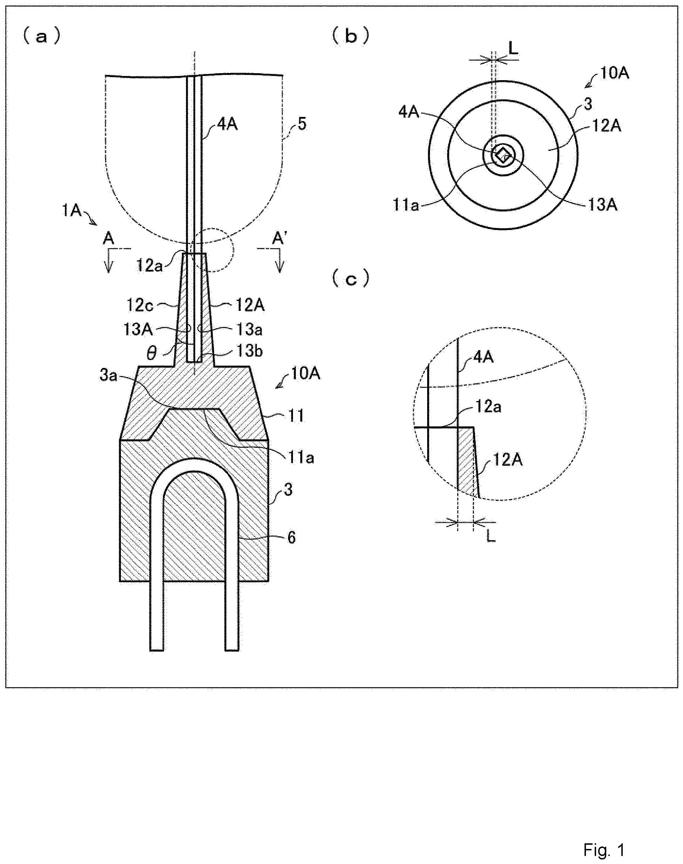

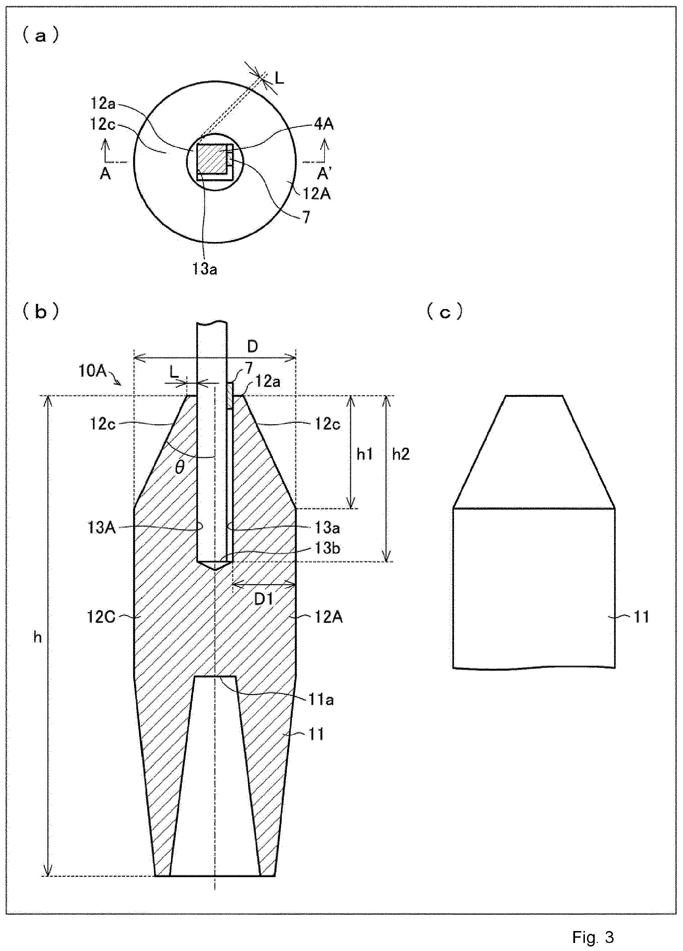

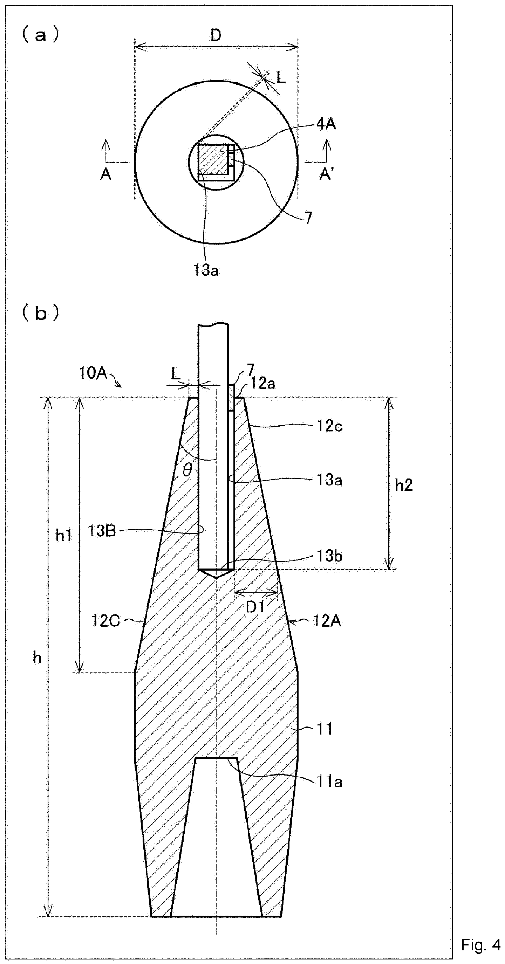

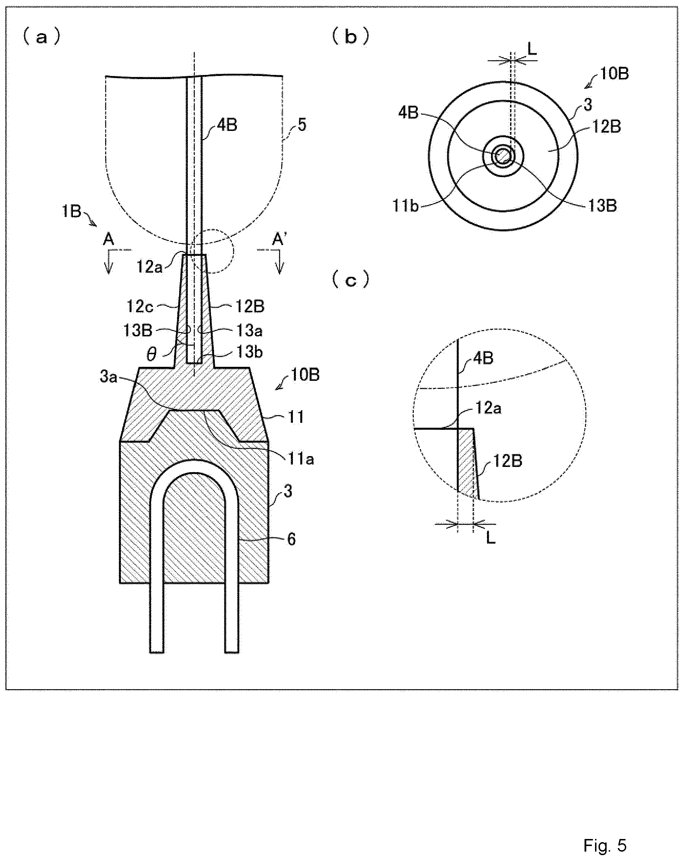

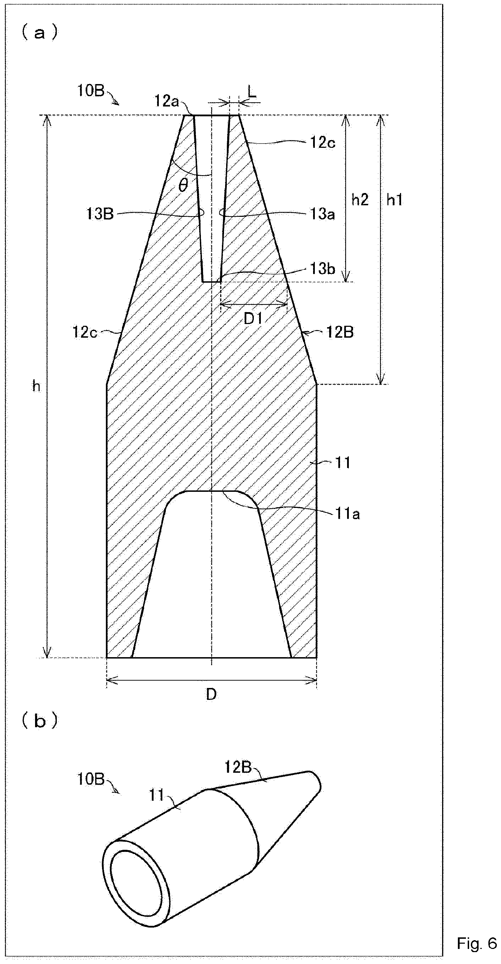

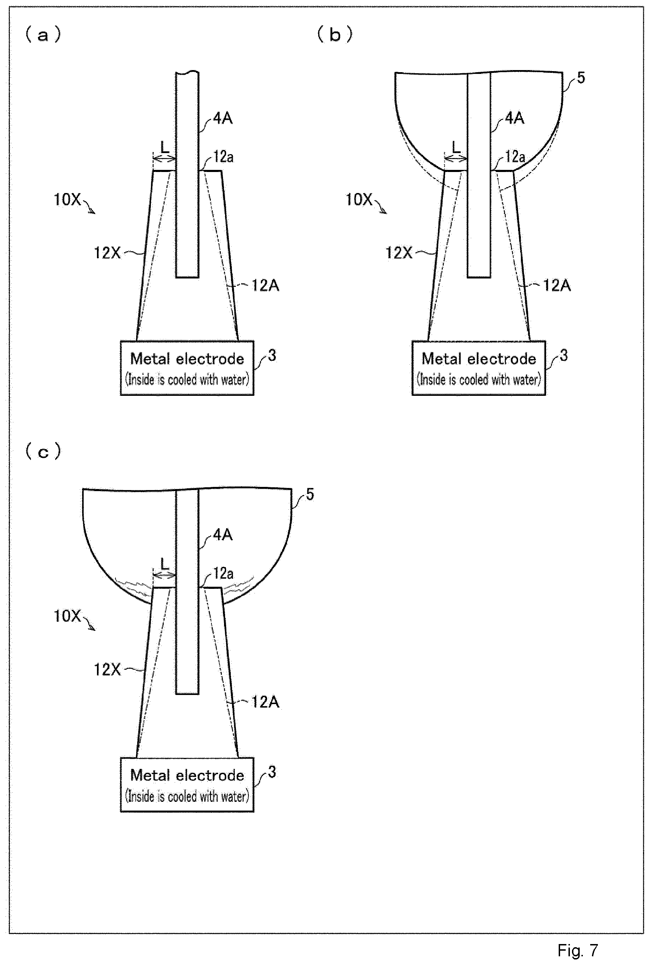

Following, further embodiments are described with reference to the figures. In the figures,
- (a) of Fig. 1: is a cross-sectional view showing a configuration of a filament holder in accordance with Embodiment 1 of the present invention. (b) of Fig. 1 is a cross-sectional view of the configuration of the filament holder, taken along line A-A' in (a) of Fig. 1. (c) of Fig. 1 is an enlarged elevational view showing a configuration of a top surface of a filament holding portion of the filament holder;

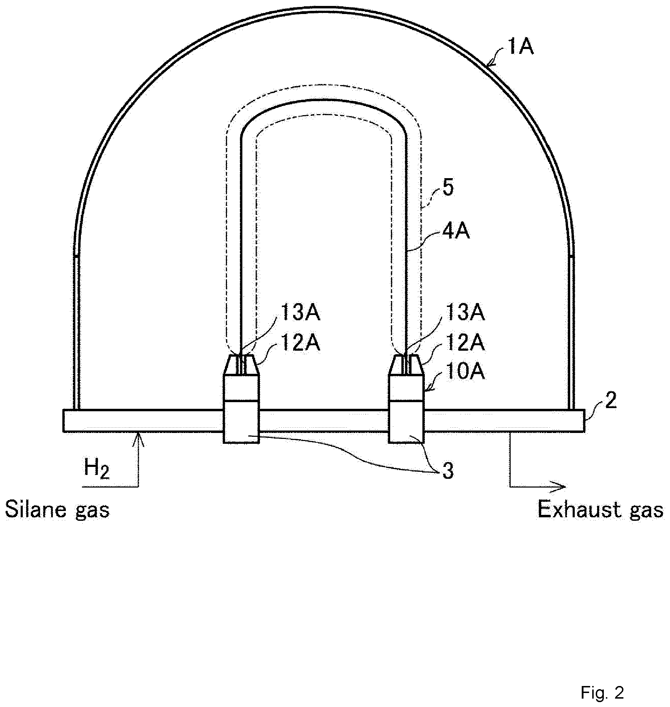

- Fig. 2: is a cross-sectional view showing a configuration of a bell-jar reactor that includes the filament holder;
- (a) of Fig. 3: is a cross-sectional view showing a configuration of a variation of a (comparative) filament holder. (b) of Fig. 3 is a cross-sectional view of the configuration of the (comparative) filament holder, taken along line A-A' in (a) of Fig. 3. (c) of Fig. 3 is an enlarged elevational view showing a configuration of a top surface of a filament holding portion of the (comparative) filament holder;
- (a) of Fig. 4: is a perspective plan view showing a configuration of a variation of the filament holder according to the invention in accordance with Embodiment 1. (b) of Fig. 4 is a cross-sectional view of the configuration of the variation of the filament holder according to the invention, taken along line A-A' in (a) of Fig. 4;
- (a) of Fig. 5: is a cross-sectional view showing a configuration of a filament holder in accordance with Embodiment 2 of the present invention. (b) of Fig. 5 is a cross-sectional view of the configuration of the filament holder, taken along line A-A' in (a) of Fig. 5. (c) of Fig. 5 is an enlarged elevational view showing a configuration of a top surface of a filament holding portion of the filament holder;
- (a) of Fig. 6: is a cross-sectional view showing a configuration of a variation of a (comparative) filament holder, (b) of Fig. 6 is a perspective view showing the configuration of the (comparative) filament holder; and
- (a) to (c) of Fig. 7: show configurations of Comparative Examples for comparison with a filament holder in accordance with an embodiment of the present invention, are cross-sectional views each showing a configuration of a filament holder and how polycrystalline silicon is deposited on a silicon filament.

The following description will discuss an embodiment of the present invention with reference to Figs. 1 to 4 and 7.

A filament holder in accordance with Embodiment 1 is included in a bell-jar reactor of a silicon production apparatus, holds a silicon filament, and passes electric current through the silicon filament. More specifically, Embodiment 1 relates to a filament holder which is provided on an electrode at a base plate of a bell-jar silicon production apparatus. First, a configuration of the bell-jar reactor is discussed with reference to Fig. 2. Fig. 2 is a cross-sectional view showing a configuration of a bell-jar reactor 1A of the silicon production apparatus of Embodiment 1.

In Embodiment 1, as a silicon production apparatus, for example, Siemens process is used to produce polycrystalline silicon. The Siemens process involves, as illustrated in Fig. 2, reducing silicon trichloride (SiHCl₃) (which is silane gas) with hydrogen (H₂) gas in the bell-jar reactor 1A, thereby allowing highly-pure polycrystalline silicon to be deposited.

As illustrated in Fig. 2, the bell-jar reactor 1A includes at least a pair of electrodes 3 provided at a base plate 2, and includes filament holders 10A which are provided on the respective electrodes 3, which hold a silicon filament 4A, and which are composed of carbon. Each of the filament holders 10A includes, in an upper part thereof, a filament holding portion 12A which has a filament insert hole 13A. The silicon filament 4A is inserted into these filament insert holes 13A, and is thereby held upright.

The bell-jar reactor 1A, which has the above-stated features, is configured such that: silicon trichloride (SiHCl₃) and hydrogen (H₂) gas are fed from the bottom into the reactor in which electric current is passed across the electrodes 3 via the filament holders 10A and thereby the silicon filament 4A is red-hot at a temperature of 900°C to 1100°C. It follows that a polycrystalline silicon 5 is deposited on the silicon filament 4A and, eventually, the polycrystalline silicon 5 grows to a diameter of 100 mm to 150 mm.

The following description will discuss the details of configurations of the filament holders 10A and the electrodes 3 with reference to (a), (b), and (c) of Fig. 1. (a) of Fig. 1 is a cross-sectional view showing a configuration of one of the filament holders 10A and one of the electrodes 3 in accordance with Embodiment 1. (b) of Fig. 1 is a cross-sectional view of the configuration of the filament holder 10A, taken along line A-A' in (a) of Fig. 1. (c) of Fig. 1 is an enlarged elevational view showing a configuration of a top surface 12a of the filament holding portion 12A of the filament holder 10A.

As illustrated in (a) of Fig. 1, each electrode 3 of Embodiment 1 is constituted by a metal electrode and has a cooling mechanism 6 which uses water cooling or the like. The electrode 3 is configured such that the electrode 3 is cooled while the polycrystalline silicon 5 is deposited on the silicon filament 4A. This protects the electrode 3 from high-temperature atmosphere, and also prevents the polycrystalline silicon 5 from being deposited on the electrode 3.

The filament holder 10A is joined to the top of the electrode 3, holds the silicon filament 4A, and applies electric potential from the electrode 3 to the silicon filament 4A. A method of joining the filament holder 10A and the electrode 3 is not particularly limited, provided that the application of electric potential is carried out smoothly. The filament holder 10A and the electrode 3 are joined preferably by means of, for example, screw shapes (threaded shapes), shapes fitting each other, bowl shapes, or the like.

The filament holder 10A is made of carbon, in order to apply electric potential from the electrode 3 to the silicon filament 4A.The filament holder 10A made of carbon is preferred in that such a filament holder 10A has an electrical conducting property that is necessary to pass electric current through the silicon filament 4A and that such a filament holder 10A has a low thermal conductivity to prevent the coolness of the electrode 3 including the cooling mechanism 6 from reaching the silicon filament 4A. The filament holder 10A made of carbon is preferred also in terms of small thermal expansion rate, because this makes it possible to prevent the deformation of the filament holder 10A at high temperature.

As illustrated in (a) and (c) of Fig. 1, the filament holder 10A includes: a base portion 11 in a lower part thereof; and the filament holding portion 12A in the shape of a truncated cone in an upper part thereof.

The base portion 11 is a portion where the filament holder 10A and the electrode 3 are joined together. In Embodiment 1, the filament holder 10A and the electrode 3 are configured such that they are joined together into one assembly by a projection 3a on the electrode 3 being fitted into a recess 11 a in the electrode 3-side face of the filament holder 10A. The outside shape of the base portion 11 is a truncated cone.

The filament holding portion 12A of the filament holder 10A is in the shape of a tapered truncated cone as illustrated in (a) of Fig. 1 in Embodiment 1. The top surface 12a of the truncated cone has the filament insert hole 13A, in which the silicon filament 4A is inserted and by which the silicon filament 4A is held.

The filament insert hole 13A is configured to have inserted therein the silicon filament 4A which has, for example, a 5 mm × 5 mm to 12 mm × 12 mm square cross section. The silicon filament 4A is arranged such that, as illustrated in Fig. 2, the silicon filament 4A is electrically connected between the electrodes 3.

The following description will discuss the details of the truncated cone shape of the filament holding portion 12A of Embodiment 1.

In a case where the angle between the axis and the generatrix of a substantially truncated cone shape of a filament holder is large like conventional techniques, the flow of source gas to a base portion of a silicon filament is reduced, resulting in a slowing down of deposition of silicon on the base portion of the silicon filament and also in a slowing down of deposition of silicon on the entire silicon filament.

In view of this, Embodiment 1 is configured such that the angle between the axis and the generatrix of a substantially truncated cone shape of a filament holder is different from those of conventional techniques, and thereby improves the deposition of silicon on a base portion of the silicon filament.

Specifically, as illustrated in (a) of Fig. 1, the filament holder 10A of Embodiment 1 is configured such that the filament holding portion 12A has a truncated cone shape in which the angle θ between the axis and the generatrix is not less than 10 degrees and not more than 30 degrees. The results of experiments demonstrate that the angle θ between the axis and the generatrix is preferably not less than 11 degrees and less than 15 degrees. For example, a comparative filament holder 10A illustrated in (a), (b), and (c) of Fig. 3 is one in which the angle θ is 25 degrees, and a filament holder 10A according to the invention illustrated in (a) and (b) of Fig. 4 is one in which the angle θ is 11 degrees.

With this configuration, the filament holding portion 12A has a shape sharply pointed upward. This allows source gas to flow smoothly to the base portion of the silicon filament 4A, increases the amount of the source gas supplied to the base portion, accelerates deposition on the base portion of the silicon filament 4A, and allows the deposition of the polycrystalline silicon 5 to become stable in the early stage.

Note that an angle θ of less than 10 degrees is not preferred, because the wall thickness of the filament holding portion 12A (i.e., the distance between an outer peripheral surface 12c of the filament holding portion 12A and an inner wall surface 13a of the filament insert hole 13A) becomes too thin and it is not possible to maintain the strength to support the silicon filament 4A. An angle θ of more than 30 degrees is not preferred, because the growth of the polycrystalline silicon 5 deposited on the base portion of the silicon filament 4A is suppressed.

Furthermore, with regard to the (comparative) filament holder 10A, as illustrated in (b) of Fig. 3 and (b) of Fig. 4 (according to the invention), the maximum thickness D1 of the filament holding portion 12A between the outer peripheral surface 12c of the filament holding portion 12A and the inner wall surface 13a of the filament insert hole 13A, in a region from the top surface 12a to a bottom 13b of the filament insert hole 13A, is not more than 30 mm. The maximum thickness D1 is preferably not more than 25 mm, more preferably not more than 20 mm. By employing a configuration satisfying the condition "the angle θ of the filament holder 10A is not less than 11 degrees and less than 15 degrees" and also employing a configuration in which the wall thickness of the outer peripheral surface 12c in a region from the top surface 12a to the bottom of the filament insert hole 13A located lower than the top surface 12a is not more than 30 mm, it is possible to prevent the electrode 3 including the cooling mechanism 6 from cooling the filament holder 10A and the filament holding portion 12A which is the upper part of the filament holder 10A.

Note here that the (comparative) filament holder 10A illustrated in (a), (b), and (c) of Fig. 3 is configured such that the angle θ of the filament holder 10A, which should be not less than 10 degrees and not more than 30 degrees, is 25 degrees, and this angle θ of 25 degrees continues along the axis over a truncated cone height h1 of 37.5 mm. It follows that the truncated cone height h1 extends over a region of at least 10 mm. Furthermore, in the (comparative) filament holder 10A illustrated in (a), (b), and (c) of Fig. 3, the maximum thickness D1 of the filament holding portion 12A, between the inner wall surface 13a and the outer peripheral surface 12c at the bottom 13b of the filament insert hole 13A, is 20.5 mm, which satisfies the condition "the maximum thickness D1 is not more than 30 mm". Note that, in the (comparative) filament holder 10A illustrated in (a), (b), and (c) of Fig. 3, the insert hole height h2 is 40 mm, and the total height h of the filament holder 10A is 130 mm. The diameter D of the filament holder 10A is 50 mm.

Furthermore, the filament holder 10A (according to the invention) illustrated in (a), (b), and (c) of Fig. 4 is configured such that an angle θ of 11 degrees continues along the axis over a truncated cone height h1 of 90 mm, and the truncated cone height h1 extends over a region of at least 10 mm. Furthermore, the maximum thickness D1 of the filament holding portion 12A between the inner wall surface 13a and the outer peripheral surface 12c at the bottom 13b of the filament insert hole 13A is 11.1 mm, which satisfies the condition "the maximum thickness D1 is not more than 30 mm". Note that, in the filament holder 10A illustrated in (a), (b), and (c) of Fig. 4, the insert hole height h2 is 40 mm, and the total height h of the filament holder 10A is 130 mm. The diameter D of the filament holder 10A is 50 mm.

It was found that, even if the filament holding portion 12A is shaped such that the angle θ between the axis and the generatrix of a substantially truncated cone shape is not less than 11 degrees and less than 15 degrees as described above, such a shape may not be appropriate for the growth of polycrystalline silicon if a margin width L, i.e., the thickness of the filament holding portion 12A having a substantially truncated cone shape at the top surface 12a, is large. Specifically, as shown by solid line in (a) of Fig. 7 (illustrating a filament holder 10X of a Comparative Example), in a case where the margin width L (i.e., the thickness of a filament holding portion 12X having a substantially truncated cone shape at the top surface 12a) is large, the polycrystalline silicon 5 on the base portion of the silicon filament 4A may not grow sufficiently in the initial stage of the deposition on the silicon filament 4A as illustrated in (b) of Fig. 7, and the silicon filament 4A may collapse. This is because, according to the filament holder 10X of the Comparative Example, source gas is difficult to reach the base portion of the silicon filament 4A and therefore the polycrystalline silicon 5 is deposited on the base portion of the silicon filament 4A slowly. Furthermore, during cooling after the deposition of the polycrystalline silicon 5 on the silicon filament 4A, as illustrated in (c) of Fig. 7, the following phenomenon is likely to occur: cracks resulting from the occurrence of stress due to thermal shrinkage spread from the vicinity of the top surface 12a; and the silicon filament 4A having the polycrystalline silicon 5 deposited thereon collapses.

In view of above, the filament holder 10A of Embodiment 1 is configured such that the margin width L, i.e., the thickness of the filament holding portion 12A having a substantially truncated cone shape at the top surface 12a, is not more than 3 mm at at least one location. The "margin width L at least one location" is discussed below. Specifically, as (comparatively) illustrated in (a) and (b) of Fig. 3, the filament holding portion 12A of Embodiment 1 is configured such that the silicon filament 4A having a 8.0 mm × 8.0 mm square cross section is inserted into the filament insert hole 13A having an about 8.4 mm × 8.4 mm square cross section and that, as illustrated (comparatively) in (a), (b), and (c) of Fig. 3, a wedge 7 is inserted between the filament insert hole 13A and the silicon filament 4A to thereby fix the silicon filament 4A. Note that a method of fixing the silicon filament 4A is not limited as such, and may be a method involving: making a screw hole (not illustrated) in the side surface of the filament holding portion 12A; and holding the silicon filament 4A with a screw.

As a result, in Embodiment 1, as (comparatively) illustrated in (a) of Fig. 3, the silicon filament 4A having a square cross section makes contact with two adjacent wall surfaces of the filament insert hole 13A having a square cross section. Therefore, in Embodiment 1, "the margin width L at least one location" at the top surface 12a of the filament holding portion 12A is, as (comparatively) illustrated in (a) of Fig. 3, the distance between (i) a point where the silicon filament 4A is in close contact with the inner wall surface 13a of the filament insert hole 13A having a square cross section and (ii) the position on the outer periphery which is closest to that point, at at least one location on the top surface 12a of the filament holding portion 12A. In Embodiment 1, this margin width L is not more than 3 mm. The margin width L is preferably not more than 3 mm, more preferably not more than 2 mm, particularly preferably not more than 1 mm.

With this, the polycrystalline silicon 5 deposited on this portion connects to the base portion of the silicon filament 4A in the early stage. That is, according to conventional techniques, the polycrystalline silicon 5 is deposited and grows first around the lengthwise middle portion of the silicon filament 4A and then is slowly deposited onto the base portion of the silicon filament 4A and adheres to the filament holding portion 12A; however, in Embodiment 1, the deposition onto the base portion of the silicon filament 4A and the adhesion to the filament holding portion 12A are achieved more quickly than the conventional techniques.

It follows that the polycrystalline silicon 5 deposited on the base portion of the silicon filament 4A supports the silicon filament 4A, making it possible to prevent the breakage of the silicon filament 4A. Furthermore, because the polycrystalline silicon 5 is deposited on the base portion of the silicon filament 4A in the early stage, it is possible to mitigate the concentration of electric current on the thin silicon filament 4A. This means that the melting of the silicon filament 4A which would otherwise be caused by the local concentration of electric current on the silicon filament 4A is prevented, and that the electric current to the silicon filament 4A can be increased early. This makes it possible to accelerate the deposition of the polycrystalline silicon 5 by increasing the electric current to the silicon filament 4A in the early stage.

Thus, it is possible to provide a filament holder 10A which is capable of improving deposition of the polycrystalline silicon 5 on a base portion of the silicon filament 4A and which in turn makes it possible to improve deposition of the polycrystalline silicon 5 on the entire silicon filament 4A.

Note that, in the (comparative) filament holder 10A illustrated in (a), (b), and (c) of Fig. 3, the margin width L is 0.75 mm at at least one location, and, in the filament holder 10A illustrated in (a), (b), and (c) of Fig. 4, the margin width L is 0.47 mm at at least one location. Thus, both satisfy the condition "the margin width L at at least one location is not more than 3 mm".

Furthermore, it has been confirmed that, for example, with regard to the (comparative) filament holder 10A illustrated in (a), (b), and (c) of Fig. 3, the deposition of the polycrystalline silicon 5 on the base portion of the silicon filament 4A starts on the side where the margin width L at at least one location is 0.75 mm.

As described earlier, the filament holder 10A of Embodiment 1 is configured such that the margin width L (i.e., the thickness of the filament holding portion 12A between the outer periphery of the top surface 12a of the filament holding portion 12A and the inner wall surface 13a, which is contacted by the silicon filament 4A, of the filament insert hole 13A) is not more than 3 mm at at least one location. In contrast, in a case where the margin width L at at least one location is more than 3 mm, as described with reference to (b) and (c) of Fig. 7, the following issues may arise, for example: the polycrystalline silicon 5 does not sufficiently grow on the base portion of the silicon filament 4A and therefore the silicon filament 4A having the polycrystalline silicon 5 deposited thereon collapses; and the grown polycrystalline silicon 5 cracks due to thermal shrinkage.

Furthermore, the filament holder 10A in accordance with Embodiment 1 is configured such that the angle θ between the axis and the generatrix is not less than 11 degrees and less than 15 degrees over a region of at least 10 mm along the axis from the top surface 12a of the filament holding portion 12A.

Specifically, it is preferable that the portion sharply pointed upward, in which the angle θ between the axis and the generatrix of the substantially truncated cone shape of the filament holding portion 12A is not less than 11 degrees and not more than 15 degrees, occupies as long as possible of a region close to the area where the silicon filament 4A is exposed from the filament holding portion 12A. In view of this, in Embodiment 1, in the filament holding portion 12A, the region where the angle θ between the axis and the generatrix of is not less than 11 degrees and less than 15 degrees extends over a region of at least 10 mm along the axis from the top surface 12a of the filament holding portion 12A. This ensures allowing source gas to flow smoothly to the base portion of the silicon filament 4A in the filament holding portion 12A, increasing the amount of the source gas supplied to the base portion, accelerating deposition on the base portion of the silicon filament 4A, and allowing the deposition of the polycrystalline silicon 5 to become stable in the early stage. Note that the effect of this configuration is especially notable in the following case: when the silicon filament 4A is set in the filament insert hole 13A in the filament holding portion 12A, the margin width L of the filament holder 10A (i.e., the thickness of the filament holding portion 12A between the outer periphery of the top surface 12a of the filament holding portion 12A and the inner wall surface 13a, which is contacted by the silicon filament 4A, of the filament insert hole 13A) is not more than 3 mm at at least one location. In a case where the region where the angle Θ between the axis and the generatrix is not less than 10 degrees and not more than 30 degrees, along the axis from the top surface 12a of the filament holding portion 12A, is less than 10 mm in the filament holding portion 12A, the flow of source gas cannot be sufficiently guided, and therefore the above-stated effect would be insufficient.

The silicon filament 4A in accordance with Embodiment 1 is configured such that the maximum thickness D1 of the filament holding portion 12A between the outer peripheral surface 12c of the filament holding portion 12A and the inner wall surface 13a of the filament insert hole 13A, in a region from the top surface 12a to the bottom 13b of the filament insert hole 13A, is not more than 30 mm.

By employing a configuration satisfying the condition "the angle θ between the axis and the generatrix of the substantially truncated cone shape of the top end portion of the filament holder 10A is not less than 11 degrees and less than 15 degrees" and also employing a configuration in which the wall thickness of the outer peripheral surface 12c in a region from the top surface 12a to the bottom of the filament insert hole 13A located lower than the top surface 12a is not more than 30 mm, it is possible to allow the density of electric current passing through the filament holder 10A to increase, allow the filament holder 10A itself to generate heat and keep the top end portion of the filament holder 10A at high temperature, and prevent the top end portion of the filament holder 10A from being cooled by the cooling mechanism 6 of the electrode 3.

As such, the filament holder 10A in accordance with Embodiment 1 is provided on one of the electrodes 3 at the base plate 2 of the bell-jar reactor 1A of a bell-jar silicon production apparatus. This filament holder 10A includes the filament holding portion 12A which is made of carbon and which has a substantially truncated cone shape, and the filament holding portion 12A has, in the top surface 12a thereof, the filament insert hole 13A configured to hold the silicon filament 4A inserted therein. Furthermore, the angle θ between the axis and the generatrix of the substantially truncated cone shape of the filament holding portion 12A is not less than 11 degrees and less than 15 degrees, and the margin width L of the filament holding portion 12A, between the outer periphery of the top surface 12a of the filament holding portion 12A and the inner wall surface 13a, which is contacted by the silicon filament 4A, of the filament insert hole 13A, is not more than 3 mm at at least one location.

Since the angle between the axis and the generatrix of the substantially truncated cone shape of the filament holding portion 12A is not less than 11 degrees and less than 15 degrees, the filament holding portion 12A has a shape that is sharply pointed upward. This allows source gas to flow smoothly to the base portion of the silicon filament 4A, increases the amount of the source gas supplied to the base portion, accelerates deposition on the base portion of the silicon filament 4A, and allows the deposition of the polycrystalline silicon 5 to become stable in the early stage.

In addition, the filament holding portion 12A having a substantially truncated cone shape is configured such that the margin width L, i.e., the thickness at the top surface 12a, is not more than 3 mm at at least one location. This allows source gas to be easily supplied to the silicon filament 4A in a gap between the top surface 12a of the filament holding portion 12A and the deposited polycrystalline silicon 5. Therefore, the deposition of the polycrystalline silicon 5 is accelerated in this gap. With this, the polycrystalline silicon 5 connects to the base portion of the silicon filament 4A in the early stage and supports the silicon filament 4A, and therefore the silicon filament 4A can be prevented from breakage. Furthermore, since the polycrystalline silicon 5 is deposited on the base portion of the silicon filament 4A in the early stage, it is possible to increase the electric current in the early stage and accelerate the deposition of the polycrystalline silicon 5.

Thus, it is possible to provide a silicon filament 4A which is capable of improving deposition of the polycrystalline silicon 5 on a base portion of the silicon filament 4A and which in turn makes it possible to improve deposition of the polycrystalline silicon 5 on the entire silicon filament 4A.

Furthermore, a silicon production apparatus in accordance with Embodiment 1 includes one or more filament holders 10A and one or more electrodes 3 in accordance with Embodiment 1. With this, according to the silicon production apparatus, electric current is applied from the electrode(s) 3 at the base plate 2 of the bell-jar reactor 1A to the silicon filament 4A disposed upright in the filament insert hole(s) 13A in the filament holding portion(s) 12A through the carbon filament holding portion(s) 12A of the filament holder(s) 10A. This raises the temperature of the silicon filament 4A, and the polycrystalline silicon 5 is deposited and grows on the silicon filament 4A. Each filament holder 10A includes the foregoing features.

Thus, it is possible to provide a silicon production apparatus including one or more filament holders 10A each of which is capable of improving deposition of the polycrystalline silicon 5 on a base portion of the silicon filament 4A and which in turn makes it possible to improve deposition of the polycrystalline silicon 5 on the entire silicon filament 4A.

In the silicon production apparatus in accordance with Embodiment 1, each of the one or more electrodes 3 includes a water-cooling mechanism as the cooling mechanism 6 therein.

This makes it possible to prevent the electrode(s) 3 from being hot and thus prevent the polycrystalline silicon 5 from being deposited also on the electrode(s) 3. It is also possible to prevent the electrode(s) 3 from being damaged due to high temperature.

A silicon production method in accordance with Embodiment 1 produces the polycrystalline silicon 5 with use of the silicon production apparatus in accordance with Embodiment 1.

This makes it possible to provide a silicon production method that produces the polycrystalline silicon 5 with use of the silicon production apparatus including one or more filament holders 10A each of which is capable of improving deposition of the polycrystalline silicon 5 on a base portion of the silicon filament 4A and which in turn makes it possible to improve deposition of the polycrystalline silicon 5 on the entire silicon filament 4A.

The following description will discuss another embodiment of the present invention with reference to Figs. 5 and 6. Note that the configurations other than those described in Embodiment 2 are the same as those of Embodiment 1. For convenience of description, members having functions identical to those shown in the drawings of Embodiment 1 are assigned identical referential numerals, and their descriptions are omitted.

With regard to the bell-jar reactor 1A of Embodiment 1, the silicon filament 4A has a square cross section, and the filament insert hole 13A in the filament holding portion 12A of each filament holder 10A also has a square cross section corresponding to the silicon filament 4A having a square cross section. Embodiment 2 is different from Embodiment 1 in that, in a bell-jar reactor 1B of Embodiment 2, a silicon filament 4B has a circular cross section and that a filament insert hole 13B in a filament holding portion 12B of each filament holder 10B also has a circular cross section corresponding to the silicon filament 4B having a circular cross section.

The following description will discuss a configuration of each filament holder 10B of the bell-jar reactor 1B of Embodiment 2 with reference to (a), (b), and (c) of Fig. 5. (a) of Fig. 5 is a cross-sectional view showing a configuration of the filament holder 10B and an electrode 3 in accordance with Embodiment 2. (b) of Fig. 5 is a cross-sectional view of the configuration of the filament holder 10B, taken along line A-A' in (a) of Fig. 5. (c) of Fig. 5 is an enlarged elevational view showing a configuration of a top surface 12a of the filament holding portion 12B of the filament holder 10B.

As illustrated in (a) and (c) of Fig. 5, the filament holder 10B of Embodiment 2 includes, similarly to the filament holder 10A of Embodiment 1: a base portion 11 in a lower part thereof; and the filament holding portion 12B in the shape of a truncated cone in an upper part thereof.

The filament holding portion 12B of the filament holder 10B is in the shape of a tapered truncated cone as illustrated in (a) of Fig. 5. The top surface 12a of the truncated cone has a filament insert hole 13B, in which the silicon filament 4B is inserted and by which the silicon filament 4B is held.

As illustrated in (a) and (b) of Fig. 5, in the bell-jar reactor 1B of Embodiment 2, the silicon filament 4B has a circular cross section. Therefore, the filament insert hole 13B in the filament holding portion 12B of the filament holder 10B of Embodiment 2 also has a circular cross section corresponding to the silicon filament 4B having a circular cross section.

The filament insert hole 13B is configured to have inserted therein the silicon filament 4B having a circular cross section with a diameter of, for example, 5 mm to 12 mm.

The truncated cone shape of the filament holding portion 12B of Embodiment 2 is such that, similarly to the filament holding portion 12A of Embodiment 1, the angle θ between the axis and the generatrix is not less than 11 degrees and less than 15 degrees, as illustrated in (a) of Fig. 5. The results of experiments demonstrate that the angle θ between the axis and the generatrix is preferably not less than 11 degrees and less than 15 degrees. For example, a (comparative) filament holder 10B illustrated in (a) and (b) of Fig. 6 is one in which the angle θ is 16 degrees. With this configuration, the filament holding portion 12B has a shape sharply pointed upward. This allows source gas to flow smoothly to the base portion of the silicon filament 4B, increases the amount of the source gas supplied to the base portion, accelerates deposition on the base portion of the silicon filament 4B, and allows the deposition of the polycrystalline silicon 5 to become stable in the early stage.

In the filament holder 10B of Embodiment 2, the maximum thickness D1 of the filament holding portion 12B between an outer peripheral surface 12c of the filament holding portion 12B and an inner wall surface 13a of the filament insert hole 13B, in a region from the top surface 12a to a bottom 13b of the filament insert hole 13B, is not more than 30 mm. The maximum thickness D1 is preferably not more than 30 mm, more preferably not more than 20 mm. By employing a configuration satisfying the condition "the angle θ of the filament holder 10B is not less than 11 degrees and less than 15 degrees" and also employing a configuration in which the wall thickness of the outer peripheral surface 12c in a region from the top surface 12a to the bottom 13b of the filament insert hole 13B located lower than the top surface 12a is not more than 30 mm, it is possible to allow the density of electric current passing through the filament holder 10B to increase, allow the filament holder 10B itself to generate heat and keep the top end portion at high temperature, and prevent the top end portion from being cooled.

For example, the (comparative) filament holder 10B illustrated in (a) and (b) of Fig. 6 is configured such that the angle θ of the filament holder 10B is 16 degrees, and this angle θ of 16 degrees continues along the axis over a truncated cone height h1 of 64.5 mm. It follows that the truncated cone height h1 extends over a region of at least 10 mm. Furthermore, in the (comparative) filament holder 10B illustrated in (a) and (b) of Fig. 6, the maximum thickness D1 of the filament holding portion 12B, between the inner wall surface 13a and the outer peripheral surface 12c at the bottom 13b of the filament insert hole 13B, is 15.8 mm, which satisfies the condition "the maximum thickness D1 is not more than 30 mm". Note that, in the filament holder 10B illustrated in (a) and (b) of Fig. 6, the insert hole height h2 is 40 mm, and the total height h of the filament holder 10B is 130 mm. The diameter D of the filament holder 10B is 50 mm.

Note that even if the filament holding portion 12B is shaped such that the angle θ between the axis and the generatrix of a substantially truncated cone shape is not less than 11 degrees and less than 15 degrees as described above, such a shape may not be appropriate for the growth of polycrystalline silicon if a margin width L, i.e., the thickness of the filament holding portion 12B having a substantially truncated cone shape at the top surface 12a, is large.

In view of above, the filament holder 10B of Embodiment 2 is configured such that the margin width L (i.e., the thickness of the filament holding portion 12B having a substantially truncated cone shape at the top surface 12a) is not more than 3 mm at at least one location. Note that the bell-jar reactor 1B of Embodiment 2 is configured such that the silicon filament 4B has a circular cross section and such that the filament insert hole 13B also has a circular cross section. Therefore, in Embodiment 2, as (comparatively) illustrated in (b) of Fig. 5, the margin width L between the inner wall surface 13a of the filament insert hole 13B and the outer periphery at the top surface 12a is the same at every location of the outer peripheral surface 12c.

With this, the polycrystalline silicon 5 deposited on this portion connects to the base portion of the silicon filament 4B in the early stage. It follows that the deposited polycrystalline silicon 5 supports the silicon filament 4B, making it possible to prevent the breakage of the silicon filament 4B. Furthermore, because the polycrystalline silicon 5 is deposited on the base portion of the silicon filament 4B in the early stage, it is possible to mitigate the concentration of electric current on the thin silicon filament 4B. This means that the melting of the silicon filament 4B which would otherwise be caused by the local concentration of electric current on the silicon filament 4B is prevented, and that the electric current to the silicon filament 4B can be increased. This makes it possible to accelerate the deposition of the polycrystalline silicon 5 by increasing the electric current to the silicon filament 4B in the early stage.

Thus, it is possible to provide a filament holder 10B which is capable of improving deposition of the polycrystalline silicon 5 on a base portion of the silicon filament 4B and which in turn makes it possible to improve deposition of the polycrystalline silicon 5 on the entire silicon filament 4B.

Note that, in the (comparative) filament holder 10B illustrated in (a), (b), and (c) of Fig. 6, the margin width L is 2.25 mm. Thus, the condition "the margin width L at at least one location is not more than 3 mm" is satisfied.

Aspects of the present invention can also be expressed as follows:
In order to attain the foregoing object, a filament holder in accordance with an aspect of the present invention is a filament holder including a filament holding portion which is made of carbon and which has a substantially truncated cone shape, in which: the filament holding portion has, in a top surface thereof, a filament insert hole configured to hold a silicon filament inserted therein; an angle between an axis and a generatrix of the substantially truncated cone shape is not less than 11 degrees and less than 15 degrees; a thickness of the filament holding portion between an outer periphery of the top surface of the filament holding portion and an inner wall surface, which is contacted by the silicon filament, of the filament insert hole is not more than 3 mm at at least one location; and the angle between the axis and the generatrix is not less than 11 degrees and less than 15 degrees over a region of at least 10 mm along the axis from the top surface of the filament holding portion.

According to the configuration, the filament holder includes a filament holding portion which is made of carbon and which has a substantially truncated cone shape, and the filament holding portion has, in the top surface thereof, a filament insert hole configured to hold a silicon filament inserted therein. With this, electric current is applied from an electrode at a base plate of a bell-jar silicon production apparatus to the silicon filament disposed upright in the filament insert hole of the filament holding portion through the carbon filament holding portion. This raises the temperature of the silicon filament, and silicon is deposited and grows on the silicon filament.

Note that, according to conventional techniques, the angle between the axis and the generatrix of the substantially truncated cone shape of the filament holder is, as described earlier, not less than 35 degrees and not more than 65 degrees. However, it was found that, if the angle is large like above, the flow of source gas to the base portion of the silicon filament is reduced, resulting in a slowing down of deposition of silicon on the base portion of the silicon filament and also in a slowing down of deposition of silicon on the entire silicon filament.

In view of above, an aspect of the present invention is arranged such that, in the filament holding portion, the angle between the axis and the generatrix of the substantially truncated cone shape is not less than 11 degrees and less than 15 degrees. With this, the filament holding portion has a shape that is sharply pointed upward. This allows source gas to flow smoothly to the base portion of the silicon filament, increases the amount of the source gas supplied to the base portion, accelerates deposition on the base portion of the silicon filament, and allows the deposition of the silicon to become stable in the early stage.

In addition, according to an aspect of the present invention, the filament holding portion having a substantially truncated cone shape is configured such that the thickness at the top surface is not more than 3 mm at at least one location. This allows the source gas to be easily supplied to the silicon filament in a gap between the top surface of the filament holding portion and the deposited silicon. Therefore, the deposition of the silicon is accelerated in this gap. With this, the silicon deposited in this portion connects to the base portion of the silicon filament in the early stage. It follows that the deposited silicon supports the silicon filament, and that the silicon filament can be prevented from breakage. Furthermore, since the silicon is deposited on the base portion of the silicon filament in the early stage, the concentration of electric current on the thin silicon filament is mitigated. This makes it possible to prevent or reduce excessive heat generation that would result from the concentration of electric current on the base portion of the thin silicon filament, and possible to prevent the silicon filament from collapsing due to melting of this portion. This makes it possible to increase the electric current in the early stage and accelerate the deposition of the silicon.

Accordingly, it is possible to provide a filament holder which is capable of improving deposition of silicon on a base portion of a silicon filament and which in turn makes it possible to improve deposition of silicon on the entire silicon filament.

The filament holder in accordance with an aspect of the present invention is arranged such that the angle between the axis and the generatrix is not less than 11 degrees and less than 15 degrees over a region of at least 10 mm along the axis from the top surface of the filament holding portion.

That is, it is preferable that the portion sharply pointed upward, in which the angle θ between the axis and the generatrix of the substantially truncated cone shape of the filament holding portion is not less than 11 degrees and less than 15 degrees, occupies as long as possible of a region close to the area where the silicon filament is exposed from the filament holding portion. Specifically, it is preferable that, in the filament holding portion, the region where the angle between the axis and the generatrix is not less than 11 degrees and less than 15 degrees extends over a region of at least 10 mm along the axis from the top surface of the filament holding portion. This ensures allowing source gas to flow smoothly to the base portion of the silicon filament, increasing the amount of the source gas supplied to the base portion, accelerating deposition on the base portion of the silicon filament, and allowing the deposition of the silicon to become stable in the early stage.

The filament holder in accordance with an aspect of the present invention is preferably arranged such that a maximum thickness of the filament holding portion between an outer peripheral surface of the filament holding portion and a wall surface of the filament insert hole, in a region from the top surface to a bottom of the filament insert hole, is not more than 30 mm.

Preferably, the thickness of the filament holding portion between the outer periphery of the top surface of the filament holding portion and the inner wall surface of the filament insert hole is not more than 1 mm.

By employing a configuration satisfying the condition "the angle between the axis and the generatrix of the substantially truncated cone shape of the top end portion of the filament holder is not less than 11 degrees and less than 15 degrees" and also employing a configuration in which the wall thickness of the outer peripheral surface in a region from the top surface to the bottom of the filament insert hole located lower than the top surface is not more than 30 mm, it is possible to allow the density of electric current passing through the filament holder to increase, allow the filament holder itself to generate heat, and keep the top end portion at high temperature.

A silicon production apparatus in accordance with an aspect of the present invention includes: the foregoing filament holder; and an electrode.

With this, in the silicon production apparatus, electric current is applied from an electrode at a base plate of a bell-jar silicon production apparatus to the silicon filament disposed upright in the filament insert hole in the filament holding portion through the carbon filament holding portion of the filament holder. This raises the temperature of the silicon filament, and silicon is deposited and grows on the silicon filament.

Furthermore, the filament holder is arranged such that the filament holding portion has, in a top surface thereof, a filament insert hole configured to hold a silicon filament inserted therein, that the angle between the axis and the generatrix of the substantially truncated cone shape is not less than 11 degrees and less than 15 degrees, and that the thickness of the filament holding portion between the outer periphery of the top surface of the filament holding portion and the inner wall surface, which is contacted by the silicon filament, of the filament insert hole is not more than 3 mm at at least one location.

Accordingly, it is possible to provide a silicon production apparatus including a filament holder which is capable of improving deposition of silicon on a base portion of a silicon filament and which in turn makes it possible to improve deposition of silicon on the entire silicon filament.

The silicon production apparatus in accordance with an aspect of the present invention is arranged such that the electrode includes a cooling mechanism therein.

This makes it possible to prevent the electrode from being hot and thus prevent the silicon from being deposited also on the electrode. It is also possible to prevent the electrode from being damaged due to high temperature.

A silicon production method in accordance with an aspect of the present invention includes producing silicon with use of the foregoing silicon production apparatus.

Accordingly, it is possible to provide a silicon production method involving producing silicon with use of a silicon production apparatus including a filament holder which is capable of improving deposition of silicon on a base portion of a silicon filament and which in turn makes it possible to improve deposition of silicon on the entire silicon filament.

The present invention is not limited to the foregoing embodiments, but can be altered variously by a skilled person in the art within the scope of the claims. The present invention also encompasses, in its technical scope, any embodiment derived by combining technical means disclosed in differing embodiments. Furthermore, a new technical feature can be formed by combining technical means disclosed in differing embodiments.

### Examples

With regard to the filament holders 10A and 10B of embodiments of the present invention, experiments were carried out to verify what effects are obtained in a case where the angle θ between the axis and the generatrix of the substantially truncated cone shape is 11 degrees and in a comparative case where the angle θ is 25 degrees. In each experiment, a silicon filament 4A or 4B was placed in the filament holder 10A or 10B and an operation to gradually increase electric current was carried out. The shortest possible time that ensures a stable increase in electric current to 300 A was measured. This "shortest possible time" means that if the electric current is increased to 300 A before this time is reached, the silicon filament 4A or 4B will melt and collapse. That is, a shorter "shortest possible time" indicates that the passage of an electric current of 300 A can be carried out earlier and the polycrystalline silicon 5 is deposited more quickly thereafter.

The results of the experiments and Comparative Examples are shown in Table 1.

As is apparent from Table 1, the shortest possible time that ensures a stable increase in electric current to 300 A was 20 hours or less in Example 1 and (comparative) Examples 2 to 4 in which the angle θ of the filament holder 10A or 10B is not less than 10 degrees and not more than 30 degrees and in which the margin width L (i.e., the thickness of the filament holding portion 12A or 12B between the outer periphery of the top surface 12a of the filament holding portion 12A or 12B and the inner wall surface 13a of the filament insert hole 13A contacted by the silicon filament 4A or 4B) is not more than 3 mm at at least one location.

On the contrary, in Comparative Examples 1 to 4 (in which one of the two conditions "the angle θ is not less than 10 degrees and not more than 30 degrees" and "margin width L at at least one location is not more than 3 mm" is not satisfied), the shortest possible time that ensures a stable increase in electric current to 300 A was equal to or more than 25 hours.

This confirmed that, in cases where the two conditions "the angle θ is not less than 11 degrees and less than 15 degrees" and "margin width L at at least one location is not more than 3 mm" are satisfied, the shortest possible time that ensures a stable increase in electric current to 300 A is short and the polycrystalline silicon 5 can be deposited stably and quickly.

**[Table 1]**

| | Angle (θ) | L (mm) | Shortest possible time that ensures stable increase in electric current to 300 A, from start of deposition (hr) | Type of filament |
|---|---|---|---|---|
| Example 1 | 11 | 1.0 | 10 | Square |
| (Comparative) Example 2 | 16 | 2.5 | 12 | Cone |
| (Comparative) Example 3 | 25 | 1.0 | 18 | Square |
| (Comparative) Example 4 | 25 | 2.5 | 20 | Cone |
| Comparative Example 1 | 11 | 8.0 | 28 | Cone |
| Comparative Example 2 | 16 | 4.0 | 25 | Cone |
| Comparative Example 3 | 35 | 2.5 | 30 | Cone |
| Comparative Example 4 | 45 | 2.5 | 35 | Cone |

### Reference Signs:

- 1A, 1B: bell-jar reactor
- 2: base plate
- 3: electrode
- 3a: projection
- 4A, 4B: silicon filament
- 5: polycrystalline silicon (silicon)
- 6: cooling mechanism
- 7: wedge
- 10A, 10B: filament holder
- 11: base portion
- 11a: recess
- 12A, 12B: filament holding portion
- 12a: top surface
- 12c: outer peripheral surface
- 13A, 13B: filament insert hole
- 13a: inner wall surface
- 13b: bottom
- D1: maximum thickness
- L: margin width (thickness)
- θ: angle

## Claims

1. A filament holder (10A, 10B) comprising a filament holding portion (12A, 12B) which is made of carbon and which has a truncated cone shape, wherein:
- the filament holding portion (12A, 12B) has, in the top surface (12a) thereof, a filament insert hole (13A, 13B) configured to hold a silicon filament (4A, 4B) inserted therein;
- an angle between the axis and the generatrix of the truncated cone shape is not less than 11 degrees and less than 15 degrees;
- a thickness of the filament holding portion (12A, 12B) between the outer periphery of the top surface (12a) of the filament holding portion (12A, 12B) and the inner wall surface (13a) of the filament insert hole (13A, 13B) is not more than 3 mm; and
- the angle between the axis and the generatrix is not less than 11 degrees and less than 15 degrees over a region of at least 10 mm along the axis from the top surface (12a) of the filament holding portion (12A, 12B).

2. The filament holder (10A, 10B) as set forth in claim 1, wherein the maximum thickness of the filament holding portion (12A, 12B) between the outer peripheral surface (12c) of the filament holding portion (12A, 12B) and the wall surface of the filament insert hole (13A, 13B), in a region from the top surface (12a) to the bottom (13b) of the filament insert hole (13A, 13B), is not more than 30 mm.

3. The filament holder (10A, 10B) as set forth in claim 1, wherein the thickness of the filament holding portion (12A, 12B) between the outer periphery of the top surface (12a) of the filament holding portion (12A, 12B) and the inner wall surface (13a) of the filament insert hole (13A, 13B) is not more than 1 mm.

4. A silicon production apparatus comprising:
- a filament holder (10A, 10B) recited in any one of claims 1 to 3; and
- an electrode.

5. The silicon production apparatus as set forth in claim 4, wherein the electrode includes a cooling mechanism therein.

6. A silicon production method comprising producing silicon with use of a silicon production apparatus recited in claim 4 or 5.

## Patentansprüche

1. Filamenthalter (10A, 10B), umfassend einen Filamenthalteabschnitt (12A, 12B), welcher aus Kohlenstoff gemacht ist und welcher eine abgeschnittene Konusform hat, wobei:
- der Filamenthalteabschnitt (12A, 12B) in seiner Oberseite (12a) ein Filamenteinsteckloch (13A, 13B) hat, welches eingerichtet ist, ein darin eingestecktes Siliziumfilament (4A, 4B) zu halten;
- ein Winkel zwischen der Achse und der Mantellinie der abgeschnittenen Konusform nicht kleiner als 11 Grad und kleiner als 15 Grad ist;
- eine Dicke des Filamenthalteabschnitts (12A, 12B) zwischen dem äußeren Umfang der Oberseite (12a) des Filamenthalteabschnitts (12A, 12B) und der inneren Wandoberfläche (13a) des Filamenteinstecklochs (13A, 13B) nicht größer als 3 mm ist; und
- der Winkel zwischen der Achse und der Mantellinie nicht kleiner als 11 Grad und kleiner als 15 Grad über einen Bereich von mindestens 10 mm entlang der Achse von der Oberseite (12a) des Filamenthalteabschnitts (12A, 12B) ist.

2. Filamenthalter (10A, 10B) nach Anspruch 1, wobei die maximale Dicke des Filamenthalteabschnitts (12A, 12B) zwischen der äußeren Umfangsoberfläche (12c) des Filamenthalteabschnitts (12A, 12B) und der Wandoberfläche des Filamenteinstecklochs (13A, 13B), in einem Bereich von der Oberseite (12a) bis zur Unterseite (13b) des Filamenteinstecklochs (13A, 13B), nicht größer als 30 mm ist.

3. Filamenthalter (10A, 10B) nach Anspruch 1, wobei die Dicke des Filamenthalteabschnitts (12A, 12B) zwischen dem äußeren Rand der Oberseite (12a) des Filamenthalteabschnitts (12A, 12B) und der innere Wandoberfläche (13a) des Filamenteinstecklochs (13A, 13B) nicht größer als 1 mm ist.

4. Siliziumherstellungsgerät umfassend:
- einen Filamenthalter (10A, 10B) wie angegeben in einem der Ansprüche 1 bis 3; und
- eine Elektrode.

5. Siliziumherstellungsgerät nach Anspruch 4, wobei die Elektrode darin einen Kühlungsmechanismus beinhaltet.

6. Siliziumherstellungsmethode, welche Siliziumherstellung unter Verwendung eines Siliziumherstellungsgeräts wie angegeben in Anspruch 4 oder 5 umfasst.

## Revendications

1. Support de filament (10A, 10B) comprenant une partie de support de filament (12A, 12B) qui est constituée de carbone et qui a une forme tronconique, dans lequel :
- la partie de support de filament (12A, 12B) comporte, sur la surface supérieure de celle-ci (12a), un trou d'insertion de filament (13A, 13B) configuré pour contenir un filament de silicium (4A, 4B) inséré dans celui-ci ;
- un angle entre l'axe et la génératrice de la forme tronconique n'est pas inférieur à 11 degrés et inférieur à 15 degrés :
- une épaisseur de la partie de support de filament (12A, 12B) entre la périphérie extérieure de la surface supérieure (12a) de la partie de support de filament (12A, 12B) et la surface de la paroi intérieure (13a) du trou d'insertion de filament (13A, 13B) n'est pas supérieure à 3 mm ; et
- l'angle entre l'axe et la génératrice n'est pas inférieur à 11 degrés et inférieur à 15 degrés sur une zone d'au moins 10 mm le long de l'axe à partir de la surface supérieure (12a) de la partie porte-filament (12A, 12B).

2. Support de filament (10A, 10B) tel que décrit dans la revendication 1, dans lequel l'épaisseur maximale de la partie de support de filament (12A, 12B) entre la surface périphérique extérieure (12c) de la partie de support de filament (12A, 12B) et la surface de la paroi du trou d'insertion de filament (13A, 13B), dans une région allant de la surface supérieure (12a) au fond (13b) du trou d'insertion de filament (13A, 13B), n'est pas supérieure à 30 mm.

3. Support de filament (10A, 10B) tel que décrit dans la revendication 1, dans lequel l'épaisseur de la partie de support de filament (12A, 12B) entre la périphérie extérieure de la surface supérieure (12a) de la partie de support de filament (12A, 12B) et la surface de la paroi intérieure (13a) du trou d'insertion de filament (13A, 13B) n'est pas supérieure à 1 mm.

4. Appareil de production de silicium comprenant :
- un support de filament (10A, 10B) tel que décrit dans l'une quelconque des revendications 1 à 3 ; et
- une électrode.

5. Appareil de production de silicium tel que décrit dans la revendication 4, dans lequel l'électrode comprend un mécanisme de refroidissement.

6. Procédé de production de silicium comprenant la production de silicium à l'aide d'un appareil de production de silicium tel que décrit dans la revendication 4 ou la revendication 5.
